Europäisches Patentamt

European Patent Office

Office européen des brevets

(11) Publication number: **0 228 702 B1**

# EUROPEAN PATENT SPECIFICATION

(45) Date of publication of patent specification: 26.06.91

(51) Int. Cl.5: **G01J 3/453**, G02F 1/17, G02F 1/01

(21) Application number: 86118013.1

(22) Date of filing: 23.12.86

(54) Interferometer including stationary, electrically alterable, optical masking device.

(30) Priority: 07.01.86 US 816821

(43) Date of publication of application:
15.07.87 Bulletin 87/29

(45) Publication of the grant of the patent:
26.06.91 Bulletin 91/26

(84) Designated Contracting States:
DE FR GB

(56) References cited:
WO-A-85/04261
US-A- 3 924 952

APPLIED OPTICS, vol. 23, no. 2, 15th January 1984, pages 269-273, Optical Society of America, New York, US; T. OKAMOTO et al.: "Fourier transform spectrometer with a self-scanning photodiode array"

APPLIED OPTICS, vol. 22, no. 22, 15th November 1983, pages 3622-3629, Optical Society of America, New York, US; R. PRAT et al.: "Phase grid-type interferential spectrometer for the near infrared"

(73) Proprietor: **Bruker Analytische Messtechnik GmbH**
**Silberstreifen**
**W-7512 Rheinstetten-Forchheim(DE)**

(72) Inventor: **Fateley, William G.**
**1928 Leavenworth**
**Manhattan Kansas 66502(US)**

(74) Representative: **KOHLER SCHMID˙ + PARTNER**
**Patentanwälte**
**Ruppmannstrasse 27**
**W-7000 Stuttgart 80(DE)**

## Description

This invention relates to the field of optics and more particularly to an interferometer according to the precharacterizing part of claim 1.

An interferometer according to the precharacterizing part of claim 1 is generally known US-A-3 924 952. The known interferometer comprises at least one displaceable grating as masking device.

Interferometry has been known and used in the fields of physics and analytical chemistry for many years. A classical, simple interferometer consists basically of a light source, a light beam collimating device, beam splitter, two reflecting mirrors, a focusing lens, and a viewing surface. In operation, a beam of light from a light source strikes the beam splitter, for example a parallel faced optical flat with a thin detective coating one one surface, or Fresnel biprism, and is thereby divided into two separate, substantially identical beams of light. These two beams are reflected and directed by the reflecting mirrors such that the two beams become parallel to one another as they strike the focusing lens. The focusing lens is typically convex and causes the emerging beams to follow generally converging paths. The converging paths in turn cause the beams to electromagnetically interfere at an interference plane (this is the plane located at the focal point of the lens and perpendicular to the axis of the lens). For a visible light, the beams produce a bright region at the interference plane where they constructively interfere; the beams produce a darker region at the interference plane where they destructively interfere.

The pattern of interference observable on the interference plane is distinctive and characteristic of the electromagnetic radiation source and of any differences in refraction of the separate parallel beams. Because of this phenomenon, the interferometer is very useful, for example, in analyzing concentrations of gases dissolved in other gases or liquids, or for determining the spectral composition of a particular light beam. One difficulty with classical interferometry is that the interference pattern must be observed directly on the interference plane in real time. This makes long term, detailed analysis and measurement of the interference pattern difficult and tedious.

One improvement to classical interferometry in recent years is the development of techniques to produce an interferogram. An interferogram is a recording of an interference pattern from an interferometer which can be analyzed separately. An interferogram can be produced by placing photographic film at the interference plane. The film is exposed to the interference pattern, removed from the interferometer, developed, and then analyzed. While this is an improvement over classical interferometry, it is also time consuming and tedious.

The photographic film technique for producing interferograms can be used to analyze infrared radiation, but the same disadvantages of time-consuming and tedious analysis are present with infrared analysis as with visible light analysis. Additionally, the photographic technique is not readily adaptable to analysis by computer.

A very recent development in interferometry involves placing a solid state silicon photodiode array at the interference plane; see the article entitled "Fourier Transform Spectrometer With a Self-Scanning Photodiode Array" by T. Okamoto et al., at pages 269-273 of Applied Optics, Vol. 23, No. 2, January 15, 1984. The photodiode array detects the bright regions in the interference pattern and converts these into electrical analog signals. The photodiode array is electrically coupled with a minicomputer which scans the array and converts the analog signals into digital signals for digital processing. The photodiode array permits quantitative detection of the interference pattern, and the microcomputer permits quick processing of the interference pattern data to mathematically construct an interferogram illustrative of the electromagnetic frequencies present and also their amptitudes. An interferogram so produced can be displayed on a cathode ray tube, X-Y plotter or stored on magnetic discs, magnetic tape, or the like.

The photodiode arrangement discussed above is useful for visible spectrum light, but presents problems when applied to infrared radiation. Analysis of infrared radiation presents special problems because known detectors are subject to extraneous infrared radiation which introduces "noise" into the infrared signal under study. Detectors such as cooled mercury-cadmium-telluride detectors have been developed to minimize the effect of unwanted infrared "noise." These detectors are expensive and not readily adaptable for use in a densely packed array.

A photodiode array similar to that discussed above but sensitive to infrared might be constructed but each photodiode would necessarily be a receptor of unwanted infrared "noise." The "noise" produced by such an array could be so great as to effectively obscure the infrared signal under analysis. If the number of photodiodes in the array is reduced, the noise is reduced proportionately, but then the resolution of the array is also reduced proportionately and again the detection of the infrared radiation under analysis is obscured.

Summary of the Invention

The problems outlined above are in large measure solved by an interferometer in accordance with the present invention. That is to say, the interferometer hereof provides high resolution of interference patterns produced by electromagnetic radiation conforming to the laws of optics and provides an extremely low signal to noise ratio for analysis of interference patterns, especially those produced by infrared radiation.

According to the invention, the interferometer according to the precharacterizing part of claim 1 is characterized by: said means of said masking device having --
a plurality of rigid masking structures electrically insulated from one another; and
means for effecting electrical connections with each of said masking structures respectively adjacent opposite extremities thereof,
each of said masking structures being formed of a material having different opacity characteristics to said radiation impinging thereon at correspondingly different electrical potentials applied to said electrical connection means, and there being means for selective alteration of said masking device for varying the portions of said interference pattern directed to, and prevented from being directed to, said focusing means.

In particularly preferred forms, a single source of light is employed which is split and caused to interfere and produce an interference pattern at an interference plane. An electrically alterable optical mask is located at the interference plane, so that the interfering beams impinge thereof. The mask can be selectively altered to transmit or reflect all or portions of the impinging interference pattern. A detecting device then receives the transmitted electromagnetic rays. The detecting device includes a focusing arrangement which concentrates the mask-transmitted pattern by way of a mirror or optical fibers to a convex focusing lens which further concentrates the pattern onto a small detector such as a photodiode or a cooled mercury-cadmium-telluride detector. The detector is electrically coupled with a minicomputer and provides analog signals according to the radiation received.

The minicomputer is electrically coupled to the mask and also provides output signals to selectively alter the mask according to a predetermined program generated by Hadamard mathematics or some other means of encodement. The minicomputer stores in memory the detector signal data utilizing a Hadamard or another mathematical transform on the recorded data corresponding to the various mask alteration patterns and then analyzes the data to mathematically reconstruct the interference pattern.

This interference pattern is then Fast Fourier transformed to give the spectral features of the source and/or source and sample. A combination of Hadamard and Fourier transforms or other analogous mathematical techniques may be used to obtain multiplexing techniques.

## Brief Description of the Drawing

Figure 1 is a perspective view of a mask used in a device according to the present invention;

Fig. 2 is a diagrammatic representation of an interferometer according to the present invention;

Fig. 3 is a partial diagrammatic representation of a second embodiment of a device according to the present invention.

## Description of the Preferred Embodiments

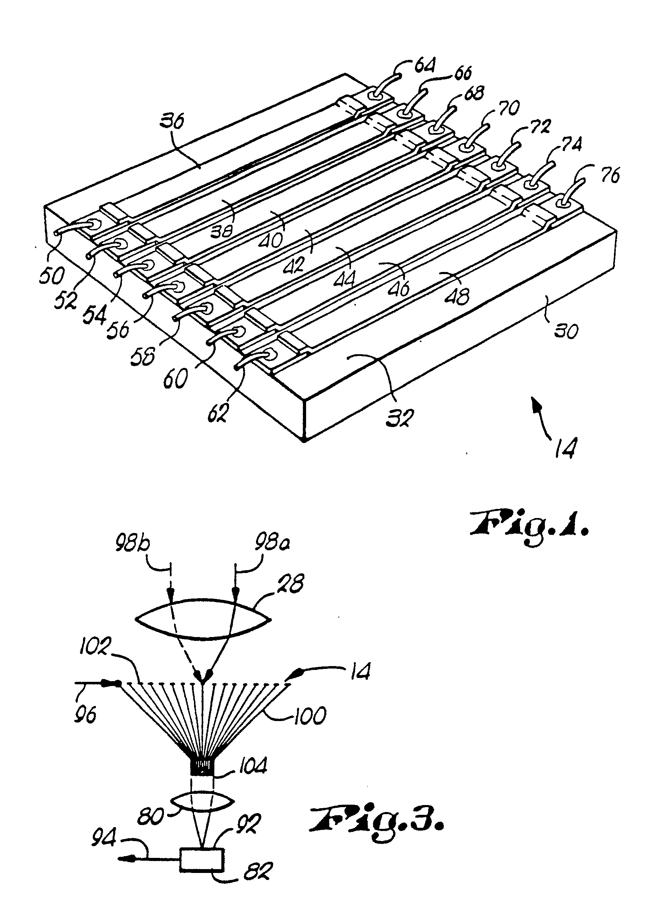

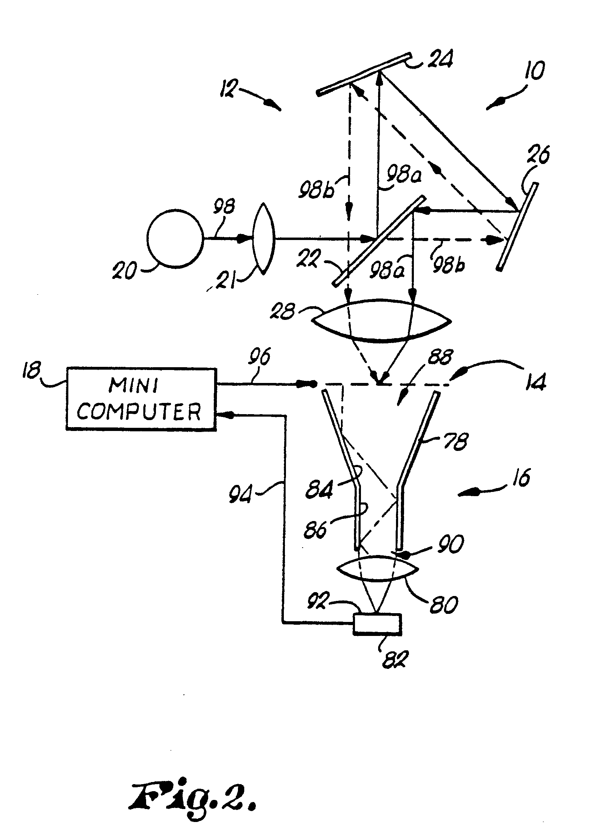

Referring now to the drawings, an interferometer device 10 according to the present invention broadly includes a beam assembly 12, a mask 14, a detector collection assembly 16 and a minicomputer 18. Fig. 2 schematically illustrates a preferred beam assembly 12 which includes radiation source 20, a collimating device 2 such as a conventional lens, beam splitter 22, planar mirrors 24 and 26, and lens 28.

Collimated radiation from source 20 is represented generally in the drawing, and can be virtually any source of electromagnetic radiation conforming to the laws of optics, depending on the purpose of the device. For example, in a conventional interferometer, an incandescent lightbulb is fixed within the device. A fixed infrared source could be used also. Additionally, the device 10 might be used to determine the frequency and amplitude composition of an external radiation source in which case the source is not part of the device 10 but rather is the subject of the analysis. Beam splitter 22 is preferably in the form of a planar optical flat with an appropriate thin film dielectric coating of instrument quality which is constructed so that part of an incident beam of electromagnetic radiation is reflected and part is transmitted. Other means commonly and conventionally used in interferometry to split an incident beam including, for example, a Fresnel biprism, or a pair of diffraction slits could also be employed.

Mirrors 24 and 26 are instrument quality planar full reflecting mirrors. Lens 28 is an instrument quality convex lens. These components are conventional and many alternative components and arrangements are known. Preferably these components are precisely mounted and fixed within a protective housing (not shown) according to well known techniques for high quality optical instruments.

Mask 14 is located at the interference plane of the device which is that plane located at the focal point of lens 28 and perpendicular to the axis of lens 28. Mask 14 is preferably of the type disclosed and discussed in US-A-4651619 which is hereby incorporated by reference. Mask 14 is designed so that different patterns of reflective and transmissive regions can be produced. Mask 14 is stationary and electrically alterable in accordance with the aforementioned patent application.

Mask 14 (Fig. 1) is preferably constructed to include a rectangular, flat, thin substrate 30 which is physically stable, electrically insulative, has a low thermal conductivity and is highly transmissive to optical-type radiation. The preferred material for substrate 30 is sapphire, although high purity silicon wafer, alkali halides and other transparent materials satisfying the mentioned design criteria may also be used. The major face of substrate 30 is designated by numeral 32.

Masking structures 36, 38, 40, 42, 44, 46 and 48 are located on face 32 of substrate 30. Structures 36, 38, 40, 42, 44, 46, 48 are rectangular, elongate, spaced apart and parallel to one another, and are composed of a thermal or electro diachromic material selected from the group consisting of the oxides of vanadium, niobium and silver tetracyanoquinone or copper tetracyanoquinone. Electrical wires 50, 52, 54, 56, 58, 60, 62, 64, 66, 68, 70, 72, 74 and 76 are connected one each to the respective ends of structures 36, 38, 40, 42, 44, 46, 48 as illustrated in Fig. 1.

Structures 36-48 exhibit a diachromic effect in that they are relatively transmissive initially but rapidly change to a relatively reflective and opaque state when subjected to electrical potential. Structures 36-48 rapidly revert to the transmissive state when electrical potential is removed.

Detector collection assembly 16 includes instrument quality mirror 78, lens 80, and detector 82 as illustrated in Fig. 2. Mirror 78 presents a generally frustoconical upper reflective surface 84 and a generally cylindrical lower reflective surface 86, and an inlet end 88 and outlet end 90. Convex lens 80 is of instrument quality and is located adjacent end 90 with the optical axis of lens 80 aligned with that of mirror 78.

Detector 82 is preferably a cooled mercury-cadmium-telluride, TGS(triglycinesulfate), DTGS (deuterotriglycine sulfate), or thermocouple detector when device 10 is used with infrared radiation, and is preferably a photodiode when device 10 is used with visible light. The detecting surface 92 of detector 82 is located at the focal point of lens 80. Detector 82 is the type which produces electrical analog signals corresponding to surface incident radiations and is electrically coupled with minicomputer 18 by minicomputer input signal cable 94.

Minicomputer 18 is of the conventional type capable of receiving input data from output signals, storing data in memory, processing that data according to a program stored in memory, and producing output signals according to the program. As can be appreciated, a wide variety of minicomputers are economically available which satisfy the required criteria. Minicomputer 18 is electrically coupled with mask 14 by output signal cable 96 which includes wires 50-76 when the mask configuration of Fig. 1 is used.

In operation, a beam 98 of electromagnetic radiation emerges from source 20, is collimated by lens 21 and strikes beam splitter 22 which splits beam 98 into two substantially identical beams 98a and 98b. Mirrors 24 and 26 in cooperation with beam splitter 22 conventionally direct the paths of beams 98a and 98b so that these beams are parallel to one another as they enter lens 28. Beams 98a and 98b are refracted by Lens 28 so that the various frequency components of the beams follow generally and relatively converging paths as they emerge from lens 28 so that beams 98a and 98b interfere and produce an interference pattern on mask 14 which occupies the interference plane. If for example the masking arrangement illustrated in Fig.1 is used for mask 14, those structures 36-48 which are deenergized by electrical potential are generally transmissive to the interference pattern, as is substrate 30. On the other hand, those structures 36-48 which are energized by electrical potential from wires 50-76 present generally opaque and reflective surface to the interference pattern.

The electromagnetic radiation of that portion of the interference pattern which impinges upon those structures 36-48 which are unenergized and therefore transmissive is transmitted through mask 14 to enter mirror 78 at inlet end 88. The radiation of the interference pattern is then reflected and concentrated by the surfaces 84, 86 to emerge and enter lens 80. Lens 80 focuses and concentrates the radiation of the interference pattern onto surface 92 of detector 82.

Detector 82 then produces electrical analog signals corresponding to the electromagnetic radiation allowed to impinge on surface 92 according to the design of detector 82. These electrical signals are in turn transmitted over signal cable 94 as input signals to minicomputer 18.

Minicomputer 18 analyzes the input signals from detector 82 and stores the data from that analysis in memory according to a program also in memory. Minicomputer 18 next sends output signals over cable 96 which includes wires 50-76 to mask 14 to change the pattern of transmissive zones configured on mask 14 by selectively applying electrical potential to structures 36-48. The reconfiguration of mask 14 by minicomputer 18 selectively occurs in a predetermined manner according to the minicomputer 18 program utilizing mathematical encodements.

The new portion of the interference pattern transmitted through mask 14 is then concentrated and focused by mirror 78 and lens 80 to detector 82 in a manner similar to that described above with the initial mask 14 configuration. Minicomputer 18 receives the new input signals over cable 96 from detector 82 and analyzes and stores the data from those input signals.

This sequence of masking pattern alteration and signal data collection is repeated for the number of times called for by the particular multiplexing technique incorporated within the minicomputer 18 program. After the sequence is complete, the program in minicomputer 18 then causes the stored data to be analyzed from which the interference pattern is mathematically reconstructed. The reconstructed interference pattern can be stored in memory, transferred to other data storage devices such as magnetic discs or magnetic tape, or displayed on a cathode ray tube, X/Y plotter or the like. The sequence of data collection and interference pattern reconstruction occurs so rapidly that an observer using device 10 can observe the reconstructed interference pattern on a cathode ray tube very shortly after the minicomputer program is initiated. Because of the rapid reconstruction, an observer sees the reconstructed interference pattern in quasi-real time.

A second embodiment of the present invention is illustrated in Fig. 3. Inasmuch as most of the components of the second embodiment are similar to those of the first embodiment, similar components are numbered the same and no further discussion of the similar components is provided. The primary difference between the second embodiment and the first embodiment is that mirror 78 of the first embodiment is replaced by a plurality of optical fibers 100 in the second embodiment. The number of fibers is determined so that there is a single optical fiber corresponding to each "window" of mask 14. To illustrate from Fig. 1, a "window" is formed when structures 38-46 are energized by wires 52-60 and 66-74. When this occurs structures 38-46 so energized become opaque but structures 36 and 48 being deenergized remain transmissive. Thus, with the Fig. 3 embodiment, sets of optical fibers corresponding to each of the 7 "windows" make up the bundle of optical fibers 100. The ends 102 of optical fibers 100 which correspond to the "windows" are located adjacent mask 14 and are the input ends. The other ends 104 of optical fibers 100 are the output ends and are bundled closely together so that optical fibers 100 are aligned parallel to one another. End 104 is located adjacent lens 80.

In operation, optical fibers 100 receive the electromagnetic radiation of the interference pattern transmitted through mask 14 at ends 102. Fibers 100 then transmit that radiation to ends 104 where the radiation emerges to impinge on lens 80. Thus, optical fibers 100 serve to transmit and concentrate the electromagnetic radiation of the interference pattern from mask 14 to lens 80 and in this regard serve the same function as mirror 78 of the first embodiment.

The advantages of a device constructed according to the present invention are substantial. The focusing arrangement allows the use of a very small detector, thereby allowing analysis of electromagnetic radiation, especially infrared, with a very low signal to noise ratio. The use of the detector and minicomputer in combination with the mask permits the application of mathematical multiplexing techniques to reconstruct and analyze the interference pattern. The device permits a large number of data measurements corresponding to a large number of mask pattern permutations thus providing detailed resolution of a reconstructed interference pattern even though only one small detector is used. The device also permits analysis in quasi-real time with computer aided analysis and reconstruction, and avoids the time-consuming and tedious photographic film technique to produce an interferogram while at the same time provides an interferogram subject to detailed analysis.

Those skilled in the art will appreciate that many variations of the device herein disclosed are possible which are contemplated by the principles of the present invention. For example, only two embodiments are illustrated for concentrating and focusing electromagnetic radiation of an interference pattern from a masking device to a detector; the invention comprehends equivalent techniques however. Additionally, the beam splitter herein disclosed is one type used in classical interferometry; there are a wide variety of such techniques different from the one exemplified herein which cause two or more beams to interfere and produce an interference pattern. A simple seven slot masking device is illustrated; however the number of slots can be increased substantially. For example, the configuration illustrated in Fig. 1 could be 255 "windows". A configuration providing many more "windows" is possible if higher resolution of the interference pattern is desired.

The described interferometer incorporates an electrically alterable mask, a minicomputer and a detector which cooperatively facilitate the use of fast Fourier and Hadamard transforms or analogous mathematical multiplexing techniques to analyze electromagnetic radiation conforming to laws of optics.

## Claims

1. An interferometer (10) comprising:
   means for creating a pair of parallel beams of electromagnetic radiation (12); means for causing said beams to interfere and produce an interference pattern (28); a masking device (14) located at a region of interference of said beams for impingement of at least a portion of said interference pattern thereon; detecting means (16) associated with said masking device, and including focusing means (80) for receiving said portion of said interference pattern directed from said masking device (14), and for focusing said received portions at a focal region, there being a detector (82) located at said focal region; and said masking device (14) including means (36-48) for selectively directing certain portions of said interference pattern to said focusing means (80), while preventing other portions of said interference pattern from being directed to said focusing means (80); characterized by:
said means of said masking device having --
a plurality of rigid masking structures (36-48) electrically insulated from one another; and
electrical connection means (50-76) provided on the opposite extremities of each of said adjacent masking structures,(36-48),
each of said masking structures (36-48) being formed of a material having different opacity characteristics to said radiation impinging thereon at correspondingly different electrical potentials applied to said electrical connection means (50-76),
and there being means for selective alteration of said masking device (14) for varying the portions of said interference pattern directed to, and prevented from being directed to, said focusing means (80).

2. The apparatus as defined in claim 1, said detecting means further including means (18) for analyzing said output signal, said analyzing means (18) including means for providing a second output signal in response to said analyzing means; and means coupling said second output signal with said electrical connection means (50-76) for selectively applying electrical potential to certain of said electrical connection means (50-76).

3. The apparatus as defined in claim 1 or 2, said masking device (14) including base means (30) generally transparent to said electromagnetic radiation, said base means (30) having two generally opposing parallel faces, said masking structures (36-48) being supported on at least one (32) of said faces.

4. The apparatus as defined in claim 3, said masking structures (36-48) being generally rectangular and elongate, said masking structures being generally parallel to one another.

5. The apparatus as defined in any of the claims 1-4, said masking structures (36-48) being formed of a material exhibiting a diachromic effect when electrically stimulated.

6. The apparatus as defined in any of the claims 1-5, said masking structures (36-48) being formed of a material selected from the group consisting of vanadium oxide, vanadium dioxide, divanadium trioxide, diniobium pentoxide, silver sulfide, silver tetracyanoquinone, and copper tetracyanoquinone and other materials which are thermal or electro diachromic.

7. The apparatus as defined in any of the claims 1-6, said focusing means including a mirror (84, 86) and a lens (80), said mirror being located for directing said received portion of said interference pattern to said lens, and said lens being located for directing said portion of said interference pattern from said mirror to said detector (82).

8. The apparatus as defined in any of the claims 1-6, said focusing means including a plurality of optical fibers (100) having input and output ends and located and operable for receiving at said input ends said received portion of said interference pattern from said masking device (14) and directing said received portion of said interference pattern towards said detector (82), and a lens (80) located adjacent said output ends of said fibers (100) and operable for directing said received portion of said interference pattern therefrom to said detector (82).

9. The apparatus as defined in any of the claims 1-8, said detecting means (16) including a photodiode or a cooled mercury-cadmium-telluride or other infrared detectors.

10. The apparatus as defined in any of the claims 1-9, said electromagnetic radiation including visible light and/or infrared radiation.

**Revendications**

1. Un interféromètre (10) comprenant :
des moyens pour créer une paire de faisceaux parallèles de rayonnement électromagnétique (12); des moyens pour faire en sorte que les faisceaux interfèrent et produisent une figure d'interférence (28); un dispositif de masquage (14), placé dans une région d'interférence des faisceaux, pour recevoir au moins une partie de la figure d'interférence; des moyens de détection (16) associés au dispositif de masquage, et comprenant des moyens de focalisation (80) qui sont destinés à recevoir la partie précitée de la figure d'interférence qui provient des moyens de masquage (14), et à focaliser les parties reçues dans une région focale, un détecteur (82) étant placé dans cette région focale; et le dispositif de masquage (14) comprenant des moyens (36-48) pour diriger sélectivement certaines parties de la figure d'interférence vers les moyens de focalisation (80), tout en empêchant que d'autres parties de la figure d'interférence ne soient dirigées vers les moyens de focalisation (80); caractérisé en ce que :

les moyens précités du dispositif de masquage comprennent :

un ensemble de structures de masquage rigides (36-48), électriquement isolées les unes des autres; et

des moyens d'établissement de connexions électriques (50-76) placés aux extrémités opposées de chacune des structures de masquage adjacentes (36-48),

chacune des structures de masquage (36-48) étant constituée par un matériau ayant des caractéristiques d'opacité différentes pour le rayonnement qu'il reçoit, pour des potentiels électriques qui diffèrent de façon correspondante et qui sont appliqués aux moyens établissant des connexions électriques (50-76),

et en ce qu'il existe des moyens destinés à modifier sélectivement le dispositif de masquage (14), pour faire varier les parties de la figure d'interférence qui sont dirigées vers les moyens de focalisation (80), et les parties qui ne peuvent pas être dirigées vers ces derniers.

2. L'appareil défini dans la revendication 1, dans lequel les moyens de détection comprennent en outre des moyens (18) qui sont destinés à analyser le signal de sortie, ces moyens d'analyse (18) comprenant des moyens destinés à fournir un second signal de sortie sous la dépendance des moyens d'analyse; et des moyens qui appliquent le second signal de sortie aux moyens établissant des connexions électriques (50-76) pour appliquer sélectivement un potentiel électrique à certains des moyens établissant des connexions électriques (50-76).

3. L'appareil défini dans la revendication 1 ou 2, dans lequel les moyens de masquage (14) comprennent des moyens de base (30) qui sont de façon générale transparents pour le rayonnement électromagnétique, les moyens de base (30) comportent deux faces opposées qui sont de façon générale parallèles, et les structures de masquage (36-48) sont supportées sur l'une au moins (32) de ces faces.

4. L'appareil défini dans la revendication 3, dans lequel les structures de masquage (36-48) sont de forme générale rectangulaire et allongée, et les structures de masquage sont de façon générale mutuellement parallèles.

5. L'appareil défini dans l'une quelconque des revendications 1 à 4, dans lequel les structures de masquage (36-48) sont constituées par un matériau présentant un effet diachromique lorsqu'il est stimulé électriquement.

6. L'appareil défini dans l'une quelconque des revendications 1 à 5, dans lequel les structures de masquage (36-48) sont constituées par un matériau sélectionné dans le groupe qui comprend l'oxyde de vanadium, le dioxyde de vanadium, le trioxyde de divanadium, le pentoxyde de diniobium, le sulfure d'argent, la tétracyanoquinone d'argent et la tétracyanoquinone de cuivre, et d'autres matériaux qui sont thermo-diachromiques ou électro-diachromiques.

7. L'appareil défini dans l'une quelconque des revendications 1 à 6, dans lequel les moyens de focalisation comprennent un miroir (84, 86) et une lentille (80), le miroir est placé de façon à diriger vers la lentille la partie reçue de la figure d'interférence, et la lentille est placée de façon à diriger vers le détecteur (82) la partie de la figure d'interférence qui provient du miroir.

8. L'appareil défini dans l'une quelconque des revendications 1 à 6, dans lequel les moyens de focalisation comprennent un ensemble de fibres optiques 9100) ayant des extrémités d'entrée et de sortie, et qui sont placées et peuvent être mises en oeuvre de façon à recevoir sur les extrémités d'entrée la partie reçue de la figure d'interférence provenant du dispositif de masquage (14), et à diriger vers le détecteur (82) cette partie reçue de la figure d'interférence, et une lentille (80) qui est placée en position adjacente aux extrémités de sortie des fibres (100) et qui est capable de diriger vers le détecteur (82) la partie reçue de la figure d'interférence qui provient des fibres.

9. L'appareil défini dans l'une quelconque des revendications 1 à 8, dans lequel les moyens de détection (16) comprennent une photodiode ou un détecteur au tellurure de mercure-cadmium refroidi, ou d'autres détecteurs infrarouges.

10. L'appareil défini dans l'une quelconque des revendications 1 à 9, dans lequel le rayonnement électromagnétique comprend la lumière visible et/ou un rayonnement infrarouge.

**Ansprüche**

1. Interferometer (10), das aufweist:
eine Einrichtung (12) zur Erzeugung zweier paralleler Strahlenbündel aus elektromagnetischen Strahlen;
eine Einrichtung (28), die die Strahlenbündel zur Interferenz bringt und ein Interferenzmuster erzeugt;
eine Maskiervorrichtung (14) die im Interferenzbereich der Strahlenbündel liegt um darauf mindestens einen Teil des Inteferenzmusters auftreffen zu lassen;
eine der Maskiervorrichtung zugeordnete Erfassungseinrichtung (16), welche eine Fokussiereinrichtung zum Empfang des Teils des von der Maskiervorrichtung (14) herkommenden Interferenzmusters und zur Fokussierung des empfangenen Teils auf einen Fokusbereich enthält, wobei am Ort des Fokussierbereichs ein Detektor (82) angeordnet ist, und die Maskiervorrichtung (14) Mittel (36 - 48) enthält um wahlweise bestimmte Teile des Interferenzmusters zur Fokussiereinrichtung (80) zu richten, während sie die Projektion anderer Teile des Interferenzmusters zur Fokussiereinrichtung (80) verhindert;
dadurch gekennzeichnet, daß
die Mittel der Maskiervorrichtung eine Vielzahl starrer, gegeneinander elektrisch isolierter Maskierrippen (36 - 48) und an den einander gegenüber liegenden Enden der nebeneinander liegenden Maskierrippen angebrachte elektrische Verbindungsmittel (50 - 76) aufweist, wobei jede Maskierrippe (36 - 48) aus einem Material besteht, dessen Strahlungsdurchlässigkeit der auf sie auftreffenden Strahlung bei entsprechend unterschiedlichen an die elektrischen Verbindungsmittel (50 - 76) angelegten elektrischen Potentialen unterschiedlich ist, und daß eine Einrichtung zur wahlweisen Veränderung der Maskiervorrichtung (14) zum Variieren der zur Fokussiereinrichtung (80) gerichteten bzw. der von der Fokussiereinrichtung (80) abgehaltenen Teile des Interferenzmusters, vorgesehen ist.

2. Interferometer nach Anspruch 1,
dadurch gekennzeichnet, daß

die Erfassungseinrichtung weiterhin Mittel (18) zum Ab-tasten des Ausgangssignals zur Erzeugung eines zweiten Ausgangssignals abhängig von den Abtastmitteln und Mittel zur Verbindung des zweiten Ausgangssignals mit den elektrischen Verbindungsmitteln (50 - 76) aufweist, um wahlweise ein elektrisches Potential an bestimmte elektrische Verbindungsmittel (50 - 76) anzulegen.

3. Interferometer nach Anspruch 1 oder 2,
dadurch gekennzeichnet, daß
die Maskiervorrichtung (14) eine für die elektromagnetische Strahlung im wesentlichen durchlässige Basis enthält, die zwei im wesentlichen einander gegenüber liegende parallele Stirnflächen aufweist, von denen mindestens eine Stirnfläche (32) die Maskierrippen (36 - 48) trägt.

4. Interferometer nach Anspruch 3,
dadurch gekennzeichnet, daß
die Maskierrippen (36 - 48) im wesentlichen rechteckig und länglich und im wesentlichen parallel zueinander angeordnet sind.

5. Interferometer nach einem der Ansprüche 1 bis 4,
dadurch gekennzeichnet, daß
die Maskierrippen (36 - 48) aus einem Material bestehen, das einen Diachromiceffekt auf eine elektrische Anregung hin zeigt.

6. Interferometer nach einem der Ansprüche 1 bis 5,
dadurch gekennzeichnet, daß
die Maskierrippen (36 - 48) aus einem Material bestehen, das aus der aus Vanadiumoxyd, Vanadiumdioxyd, Divanadiumtrioxyd, Diniobiumpentoxyd, Silbersulfid, Silbertetracyanchinon und Kupfertetracyanchinon und andere Verbindungen, die einen thermischen oder elektrischen Diachromiceffekt haben, bestehenden Gruppe ausgewählt ist.

7. Interferometer nach einem der Ansprüche 1 bis 6,
dadurch gekennzeichnet, daß
die Fokussiereinrichtung einen Spiegel (84, 86) und eine Linse (80) enthält, von denen der Spiegel an einem Ort, wo er den empfangenen Teil des Interferenzmusters auf die Linse richtet und die Linse an einem Ort vorgesehen ist, wo sie den Teil des vom Spiegel empfangenen Interferenzmusters auf den Detektor (82) wirft.

8. Interferometer nach einem der Ansprüche 1 bis 6,

dadurch gekennzeichnet, daß
die Fokussiereinrichtung mehrere Lichtleitfasern (100) die jeweils ein Eingangs- und Ausgangsende haben und so angebracht und betreibbar sind, daß sie den an ihren Eingangsenden von der Maskiervorrichtung (14) empfangenen Teil des Interferenzmusters auf den Detektor (82) werfen und eine Linse (80) aufweist, die neben den Ausgangsenden der Lichtleitfasern (100) angeordnet und so betreibbar ist, daß sie den davon empfangenen Teil des Interferenzmusters auf den Detektor (82) richtet.

9. Interferometer nach einem der Ansprüche 1 bis 8,
dadurch gekennzeichnet, daß
die Erfassungseinrichtung (16) eine Photodiode oder einen gekühlten Quecksilber-Cadmiumtellurid oder einen anderen Infrarotdetektor aufweist.

10. Interferometer nach einem der Ansprüche 1 bis 9,
dadurch gekennzeichnet, daß
die elektromagnetische Strahlung sichtbares Licht und/oder Infrarotstrahlung enthält.

**Fig.1.**

**Fig.3.**

**Fig.2.**